**Europäisches Patentamt**

**European Patent Office**

(19)

**Office européen des brevets**

(11) Veröffentlichungsnummer : **0 375 711 B1**

(12) # EUROPÄISCHE PATENTSCHRIFT

(45) Veröffentlichungstag der Patentschrift :
**11.11.92 Patentblatt 92/46**

(51) Int. Cl.$^5$ : **G05B 19/05**

(21) Anmeldenummer : **88907123.9**

(22) Anmeldetag : **18.08.88**

(86) Internationale Anmeldenummer :
**PCT/DE88/00507**

(87) Internationale Veröffentlichungsnummer :
**WO 89/02099 09.03.89 Gazette 89/06**

(54) **VERFAHREN ZUM BETRIEB EINER SPEICHERPROGRAMMIERBAREN STEUERUNG UND EINRICHTUNG ZUR DURCHFÜHRUNG DES VERFAHRENS.**

(30) Priorität : **27.08.87 DE 3728661**

(43) Veröffentlichungstag der Anmeldung :
**04.07.90 Patentblatt 90/27**

(45) Bekanntmachung des Hinweises auf die
Patenterteilung :
**11.11.92 Patentblatt 92/46**

(84) Benannte Vertragsstaaten :
**AT CH DE FR IT LI SE**

(56) Entgegenhaltungen :
**DE-A- 2 401 645**
**DE-A- 2 703 673**
**DE-A- 2 718 122**
**DE-A- 2 845 773**
**US-A- 4 101 967**

(56) Entgegenhaltungen :
**US-A- 4 129 901**
**RADIO FERNSEHEN ELEKTRONIK, volume 35,
Nr. 12, 1986, (Berlin, DD), G. Rüdiger :
"Programmierbare Steuerung mit Bitprozessor",pages 763-766, see pages 763-766.**

(73) Patentinhaber : **SIEMENS
AKTIENGESELLSCHAFT
Wittelsbacherplatz 2
W-8000 München 2 (DE)**

(72) Erfinder : **HINSKEN, Gerhard
In den Feldreben 3
W-7600 Offenburg (DE)**
Erfinder : **JÄGER, Reinhard
Kochgässle 6
W-7601 Ortenberg (DE)**
Erfinder : **OSSWALD, Martin
Wilhelmstr. 17
W-7601 Schutterwald (DE)**

## Beschreibung

Die Erfindung bezieht sich auf ein Verfahren zum Betrieb einer speicherprogrammierbaren Steuerung, bei dem ein Bitprozessor eine Gesamtmenge von Eingangssignalen entsprechend einer Reihe von Befehlen sequentiell nach den Regeln der Boolschen Algebra verknüpft, wobei das jeweils vorliegende Verknüpfungsergebnis mit einem weiteren Signal verknüpft wird und das weitere Signal im Falle, daß der nächste Befehl ein "UND"-Befehl ist, seinerseits durch Verknüpfung von Eingangssignalen gebildet wird, sowie auf eine Anordnung zur Durchführung eines derartigen Verfahrens.

Bei speicherprogrammierbaren Steuerungen werden von einem Bitprozessor binäre Eingangssignale, die bestimmten Schalterstellungen, Ventilzuständen usw. von technischen Anlagen entsprechen, gemäß einem vom Anwender vorgegebenen Programm abgefragt und vom Bitprozessor logisch verknüpft, Dabei wird das jeweils letzte Verknüpfungsergebnis des Bitprozessors wird mit dem logischen Kennsignal des jeweils nächsten, durch das Programm vorgegebenen Eingangssignal verknüpft und ein neues Verknüpfungsergebnis gebildet, Auf diese Weise wird das Programm Schritt für Schritt abgearbeitet. Mit dem logischen Signal, das dem zuletzt gebildeten Verknüpfungsergebnis entspricht, können ein oder mehrere Ausgänge gesteuert werden.

Ein solches Verfahren ist beispielsweise aus dem Buch "Steuerungen programmieren mit STEP 5" Bd.I, von Berger, H., Siemens AG Berlin, München 1982 bekannt.

Aus der Zeitschrift "Radio, Fernsehen, Elektronik", Bd. 35, Nr. 12, 1986 (Berlin, DD) G. Rüdiger: "Programmierbare Steuerung mit Bitprozessor", Seiten 763 bis 766 ist ferner eine programmierbare Steuerung bekannt, die einen temporären Speicher enthält, in welchen Zwischenergebnisse eingetragen werden können. Bei Bedarf können diese Zwischenergebnisse in ein Resultat-register geladen werden, oder es kann eine logische Operation mit ihnen ausgeführt werden. Dies kann dann sinnvoll sein, wenn Programmverzweigungen auftreten und das Zwischenergebnis vor Programmverzweigung gespeichert werden muß, bis der eine Programmzweig abgearbeitet ist.

Bei derartigen speicherprogrammierbaren Steuerungen kann es erforderlich sein, daß außer der Gesamtmenge der Eingangssignale, die Programm miteinander verknüpft werden sollen, auch Teilmengen zur Steuerung anderer Ausgänge ausgewählt und verknüpft werden sollen.

Bisher wurden zur Verknüpfung bestimmter Teilmengen von Eingangssignalen jeweils eigene Programme vorgegeben, die dann nacheinander vom Bitprozessor abgearbeitet werden mußten.

Der vorliegenden Erfindung liegt die Aufgabe zugrunde, während der Abarbeitung eines Programms, mit dem eine vorgegebene Gesamtmenge von Eingangssignalen logisch miteinander verknüpft wird, gleichzeitig vorgegebbare Teilmengen von Eingangssignalen miteinander zu verknüpfen und in Abhängigkeit vom Ergebnis der Verknüpfung dieser Teilmengen Ausgangssignale zu erzeugen.

Gemäß der Erfindung wird diese Aufgabe mittels eines Verfahrens der eingangs genannten Art dadurch gelöst,

- daß beim ersten Befehl "UND-Klammer-Auf" das vorliegende Verknüpfungsergebnis des Bitprozessors als Verknüpfungsstatus in einem nach dem Prinzip First-In-Last-Out arbeitenden Stapelspeicher abgelegt wird,
- daß bei jedem weiteren Befehl "UND-Klammer-Auf" jeweils ein weiterer Verknüpfungsstatus durch UND-Verknüpfung des jeweils letzten, im Stapelspeicher eingetragenen Verknüpfungsstatus mit dem jeweils vorliegenden Verknüpfungsergebnis des Bitprozessors gebildet wird,
- daß mit einem Befehl "Setze-Zwischenmerker" in einen Zwischenmerker-Speicher ein Zwischenmerker-Ergebnis abgelegt wird, das sich durch eine UND-Verknüpfung aus den jeweils zuletzt in den Stapelspeicher eingetragenen Verknüpfungsstatus und dem aktuellen Verknüpfungsergebnis des Bitprozessors ergibt, und
- daß das jeweilige Zwischenmerker-Ergebnis mit einem weiteren Befehl "Lade-Zwischenmerker" vom Bitprozessor zur Verknüpfung mit weiteren Signalen oder zur Ansteuerung eines Ausganges übernommen wird.

Dadurch lassen sich bei der Programmierung von Verknüpfungen einer Gesamtmenge von Eingangssignalen, nicht nur Teilmengen von Eingangssignalen innerhalb des gleichen Programms problemlos verknüpfen und in Abhängigkeit davon verschiedene Ausgänge ansteuern, ohne daß dafür eigene Programme geschrieben werden müssen, sondern es wird auch ein geringerer Bedarf an Speicherkapazität erreicht und es wird eine erhebliche Zeitersparnis bei der Programmierung sowie beim Programmablauf gegenüber dem herkömmlichen Verfahren erzielt.

Eine Ausbildung der Erfindung ist dadurch gekennzeichnet, daß durch den Bitprozessor ein jeweiliges Zwischenmerker-Ergebnis aus dem Zwischenmerker-Speicher für die weitere Verarbeitung einer zusätzlichen Anzahl von Eingangssignalen übernehmbar ist. Dies ermöglicht es, in Abhängigkeit vom Verknüpfungsergebnis einer Teilmenge von Eingangssignalen weitere Eingangssignale aus derselben oder einer anderen technischen Anlage, die in der durch ein Programm vorgesehenen Gesamtmenge von Eingangssignalen nicht enthalten sind, zu verknüpfen.

Zur Durchführung des erfindungsgemäßen Verfahrens erweist sich eine Einrichtung als besonders geeignet, die dadurch gekennzeichnet ist, daß der Bitprozessor mit einem Eingang einer UND-Logik verbunden ist, daß der Ausgang der UND-Logik mit einem Stapelspeicher und mit einem Zwischenmerker-Speicher verbunden ist, daß der zweite Eingang der UND-Logik mit dem Ausgang des Stapelspeichers verbunden ist und daß die Zwischenmerker-Ergebnisse im Zwischenmerker-Speicher durch den Bitprozessor adressierbar und einlesbar sind. Diese Einrichtung, die entweder integraler Bestandteil des Bitprozessors oder extern aufgebaut sein kann, ermöglicht einen besonders einfachen Verfahrensablauf, indem parallel zur sequentiellen Verarbeitung der Eingangssignale durch den Bitprozessor automatisch bei jeder UND-Klammer-Auf-Steueranweisung der jeweilige Verknüpfungsstatus gebildet wird und indem die abgespeicherten Zwischenmerker-Ergebnisse jederzeit für die weitere Verarbeitung durch den Bitprozessor zur Verfügung stehen.

Ein Ausführungsbeispiel der Erfindung ist in der Zeichnung dargestellt und wird im folgenden näher erläutert. Dabei zeigen:

FIG 1 einen Kontaktplan einer speicherprogrammierten Steuerung und

FIG 2 ein Blockschaltbild einer Einrichtung zur Durchführung des Verfahrens.

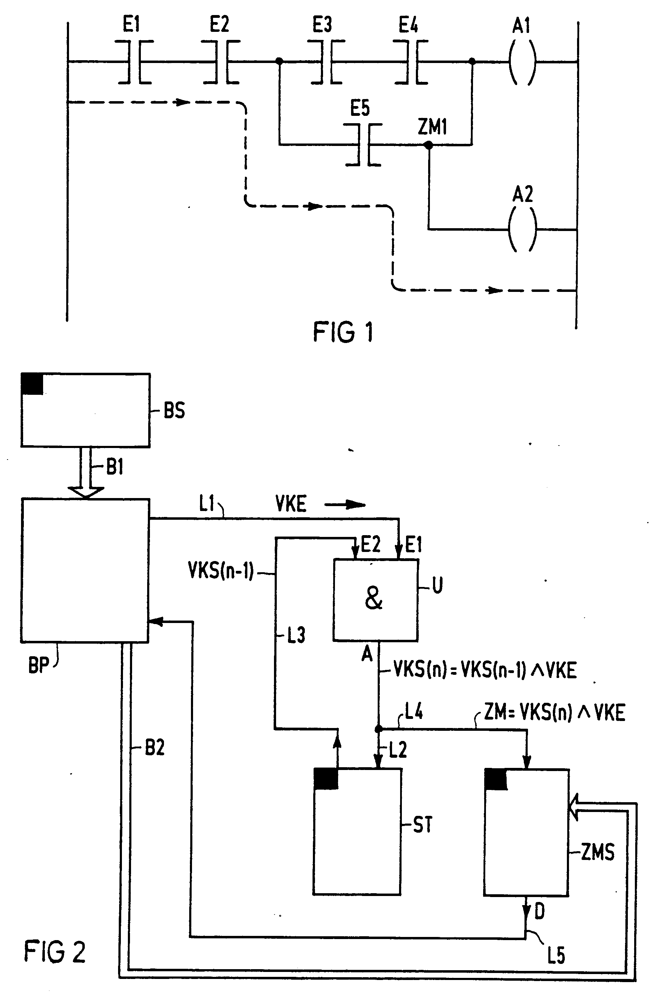

Die Darstellung gemäß FIG 1 zeigt einen Kontaktplan, wie er zur Veranschaulichung eines Programmablaufs und - bei modernen speicherprogrammierbaren Steuerungen - zur direkten Eingabe eines Programms verwendet wird. Solch ein Kontaktplan kann beispielsweise auf einem Bildschirmgerät einer speicherprogrammierbaren Steuerung zur Anzeige gebracht werden.

Die senkrechte Linie, die den Kontaktplan auf der linken Seite begrenzt, zeigt den Beginn, die senkrechte Linie, die den Kontaktplan auf der rechten Seite begrenzt, zeigt das Ende des Programmablaufs an. Die mit E1 bis E5 bezeichneten Kontaktsymbole stellen sogenannte Schließer (nach DIN 19 239) dar, die mit A1 und A2 bezeichneten Symbole stellen Ausgänge der speicherprogrammierbaren Steuerung dar. Die Kontaktsymbole E1 bis E5 werden im folgenden mit "Eingänge E1 ... E5" bezeichnet.

Durch die Reihenschaltung von Schließern, wie das beispielsweise bei den Eingängen E1 und E2 der Fall ist, wird eine logische UND-Verknüpfung symbolisiert; durch die Parallelschaltung von Schließern, wie dies beim Eingang E5, der zu den Eingängen E3 und E4 parallel liegt, wird eine ODER-Verknüpfung beschrieben.

Auf die Darstellung von NICHT-UND-Verknüpfungen und NICHT-ODER-Verknüpfungen wurde der Übersichtlichkeit halber verzichtet. Andere Verknüpfungsarten der Boolschen Algebra, wie beispielsweise NAND- oder NOR-Verknüpfungen lassen sich durch Kombinationen von UND-, ODER-, NICHT-UND-, NICHT-ODER-Verknüpfungen verwirklichen.

Wie bereits oben erwähnt, kann bei modernen speicherprogrammierbaren Steuerungen der Kontaktplan direkt in ein ablauffähiges Programm übersetzt werden. Das Programm kann auch in Form einer Anweisungsliste eingegeben werden. Eine solche Anweisungsliste soll im folgenden zum besseren Verständnis anhand des Kontaktplans aufgestellt werden.

Ein Kontaktplan wird stets von links nach rechts und von oben nach unten gelesen und in entsprechende Steueranweisungen für den Bitprozessor BP, auf den im Zusammenhang mit FIG 2 noch eingegangen wird, übersetzt. Eine solche Steueranweisung besteht gewöhnlich aus einem Operationsteil und einem Operandenteil (DIN 19 239). Dabei gibt der Operationsteil an, was getan werden soll - ob eine UND-, ODER- etc. Verknüpfung durchzuführen ist -, der Operandenteil gibt an, womit es getan werden soll - beispielsweise mit dem Eingang E3, dem Eingang E2, oder dem Ausgang A1 -. Die Abfrage eines Eingangs auf den Signalzustand logisch "O" oder logisch "I" und die Verknüpfung des abgefragten Signalzustands nach UND wird durch die Operation "U" in Verbindung mit dem Operanden, z.B. Eingang E1, gekennzeichnet. Die Verknüpfung des abgefragten Signals nach ODER wird durch die Operation "O", ebenfalls in Verbindung mit den entsprechenden Operanden, gekennzeichnet. Die Steuerungsanweisung "UE1" besagt beispielsweise, daß eine UND-Operation mit dem Signal, das am Eingang E1 anliegt mit dem aktuellen Verknüpfungsergebnis des Bitprozessors BP durchgeführt werden soll. Dieser Sachverhalt kann auch durch die Formulierung: "Der Eingang E1 wird zu UND verknüpft" ausgedrückt werden. Der Bitprozessor BP arbeitet dabei nach der Regel UND vor ODER. Sind ODER-Verknüpfungen vor UND-Verknüpfungen auszuführen, so muß die jeweilige ODER-Verknüpfung innerhalb einer zu programmierenden Klammerebene ausgeführt werden. Die Programmierung einer Klammerebene hat zur Folge, daß der Bitprozessor BP beim Ablauf des Programms das jeweilige Verknüpfungsergebnis vor dem Abarbeiten der Klammerebene in ein Merker-Register rettet und erst dann mit dem Abarbeiten der Klammerebene beginnt. Eine solche Klammerebene muß jedesmal dann eingegeben werden, wenn im Kontaktplan eine Verzweigung auftritt, da eine Verzweigung das Kennzeichen einer ODER-Funktion ist.

Zum besseren Verständnis der Erfindung soll zunächst vom Stand der Technik ausgegangen werden. Dazu soll eine Anweisungsliste, die aus einer Summe von Steueranweisungen besteht, aus dem Kontaktplan gemäß FIG 1 ohne die Verzweigung vom Punkt ZMI zum Ausgang A2 erstellt werden.

Die Steueranweisung für den Eingang E1 ist

1. UE1

Wie oben bereits ausgeführt, heißt dies, daß der Eingang E1 mit dem Verknüpfungserpebnis VKE des Bitprozessors BP zu UND verknüpft werden soll. Da jedoch bei der ersten Steueranweisung noch kein Verknüpfungsergebnis VKE im Bitprozessor BP vorliegt, wird das am Eingang E1 anliegende logische Kennsignal direkt als Verknüpfungsergebnis VKE in das Verknüpfungsergebnis-Register übernommen. Im zweiten Programmschritt ergibt sich aus derReihenanordnung der Eingänge E1 und E2, daß der Eingang E2 mit dem vorliegenden Verknüpfungsergebnis VKE zu UND verknüpft werden soll. Die Steueranweisung dafür ist:

2. UE2

Im dritten Programmschritt muß die durch die Verzweigung (Knotenpunkt) erkennbare ODER-Verknüpfung des Eingangs E5 mit der Reihenschaltung der Eingänge E3 und E4, durch eine UND-Klammer-Steueranweisung berücksichtigt werden:
Innerhalb dieser Klammer soll der Eingang E3 mit dem Eingang E4 zu UND verknüpft werden und das Ergebnis dieser Verknüpfung soll dann - nach Schließen der Klammer - mit dem Eingang E5 zu ODER verknüpft werden. Schließlich soll mit dem Verknüpfungsergebnis VKE, das nach der 7. Steueranweisung vorliegt, der Ausgang A1 angesteuert werden. Die gesamte Anweisungsliste lautet demnach:

1. UE1
2. UE2
3. U(
4. UE3
5. UE4
6. OE5
7. )
8. = A1

Bei der oben angegebenen 3. Steueranweisung "U(" wird der Bitprozessor BP das Verknüpfungsergebnis automatisch in einem Zwischenspeicher (Klammer-Stack-Speicher) ablegen und mit der Ausführung der 4. Steueranweisung "UE3" fortfahren. Dies geschieht ebenso wie bei der 1. Steueranweisung durch direkte Übernahme des Signalzustandes am Eingang E3, da auch hier kein Verknüpfungsergebnis aus einer vorhergehenden Operation vorliegt. Nach Schließen der Klammer in der 7. Steueranweisung wird das Verknüpfungsergebnis, das sich durch die ODER-Verknüpfung ("OE5", 6. Steueranweisung) innerhalb der Klammer ergeben hat, mit dem beim Öffnen der Klammer ("U(", 3. Steueranweisung) abgespeicherten Verknüpfungsergebnis der UND-Verknüpfung der Eingänge E1 und E2 wieder zu "UND" verknüpft und mit dem schließlich erhaltenen logischen Kennsignal des resultierenden Verknüpfungsergebnisses kann der Ausgang A1 angesteuert werden.

Nun soll der Fall betrachtet werden, daß zusätzlich zum Ausgang A1, der in Abhängigkeit von der Gesamtzahl der Eingangssignale E1 bis E5 angesteuert wird, ein Ausgang A2 in Abhängigkeit vom Ergebnis der Verknüpfung der Eingänge E1, E2 und E5 angesteuert werden soll. Der Programmfluß für diese Verknüpfung ist dabei im Kontaktplan durch eine gestrichelte, mit Pfeilen versehene Linie angedeutet. Der mit ZMI bezeichnete Verzweigungspunkt zum Ausgang A2 bedeutet dabei, daß an dieser Stelle ein Verknüpfungsergebnis VKE, das der Verknüpfung der Eingänge E1, E2 und E5 entspricht, gebildet werden soll.

Dieses zu bildende Verknüpfungsergebnis heißt Zwischenmerker-Ergebnis ZMI. Es ist jedoch nicht identisch mit dem Verknüpfungsergebnis das sich beim normalen Programmablauf nach Durchführung der 6. Steueranweisung ergibt. Nach der ODER-Anweisung ("OE5", 6. Steueranweisung) wird nämlich das aktuelle Verknüpfungsergebnis durch die logische ODER-Verknüpfung des Verknüpfungsergebnisses das bei der 5. Steueranweisung vorlag mit dem logischen Signalzustand des Eingangs E5 gebildet. Das Zwischenmerker-Ergebnis ZMI soll sich jedoch aus der UND-Verknüpfung der drei Eingangssignale E1, E2 und E5 ergeben.

Hier setzt die Erfindung ein. Um die Verknüpfung von Teilmengen aus der Gesamtmenge der durch das Programm abzufragenden Eingangssignale, wie beispielsweise die Signale der Eingänge E1, E2 und E5, im vorliegenden Programmablauf zu ermöglichen, ist die speicherprogrammierte Steuerung so ausgebildet, daß automatisch bei jedem UND-Klammer-Auf-Befehl, wie hier in der 3. Steueranweisung, aus dem jeweils vorliegenden Verknüpfungsergebnis VKE ein Verknüpfungsstatus VKS(n) gebildet wird, indem der jeweils vorhergehende Verknüpfungsstatus VKS(n - l) mit dem jeweils vorliegenden Verknüpfungsergebnis VKE nach einer UND-Funktion verknüpft wird. Dieser jeweilige Verknüpfungsstatus VKS(n) wird automatisch an die erste Stelle eines Stapelspeichers geschrieben. Auf die Begriffe Verknüpfungsergebnis VKE und Verknüpfungsstatus VKS(n), VKS(n-l) sowie den Stapelspeicher ST wird im Zusammenhang mit FIG 2 noch eingegangen werden.

Im Beispiel ergibt sich das Verknüpfungsergebnis VKE, das beim UND-Klammer-Auf-Befehl (3. Steueranweisung) vorliegt, aus der UND-Verknüpfung der Eingänge E1 und E2. Da vorher noch kein Verknüpfungsstatus VKS(n) gebildet wurde, wird das vorliegende Verknüpfungsergebnis VKE direkt als Verknüpfungsstatus VKS(l) in den Stapelspeicher ST übernommen.

Mit Hilfe des Verknüpfungsstatus VKS(n) kann an jeder Stelle innerhalb einer Klammerebene, wie hier nach dem Eingang E5, ein Zwischenmerker-Ergebnis ZMI gebildet werden, das der Verknüpfung einer vorgebbaren Teilmenge von Eingangssignalen entspricht.

Dabei ergibt sich beispielsweise das Zwischenmerker-Ergebnis ZMI aus der UND-Verknüpfung des am Punkt ZMI vorliegenden Verknüpfungsergebnisses VKE und des zuletzt gebildeten Verknüpfungsstatus VKS(n), wobei dieser Vorgang durch eine an der entsprechenden Stelle des Programms - im Beispiel zwischen der 6. und 7. Steueranweisung - vorzusehende Steueranweisung "SZM: Setze Zwischenmerker" initiiert wird. Durch eine Steueranweisung "LZM: Lade-Zwischenmerker" die ebenfalls in den Befehlsvorrat des Mikroprozessors zu integrieren ist, kann das Zwischenmerker-Ergebnis entweder sofort im Anschluß oder am Ende des gesamten Programmablaufs vom Bitprozessor BP geladen werden und direkt zur Ansteuerung des Ausgangs A2 oder zur weiteren Verarbeitung mit anderen Eingangssignalen die nicht im Programmablauf vorgesehen sind, verwendet werden.

Die Darstellung gemäß FIG 2 zeigt ein Blockschaltbild einer Einrichtung zur Durchführung des Verfahrens. Sie besteht aus einem Befehlsspeicher BS der über einen Bus BI mit dem Bitprozessor BP verbunden ist. Letzterer ist über eine Leitung L1 mit dem ersten Eingang E1 eines UND-Glieds U verbunden. Vom Ausgang des UND-Glieds U führt eine Leitung L2 zu einem Stapelspeicher ST, eine Leitung L4 zu einem als Schreib-Lese-Speicher ausgebildeten Zwischenmerker-Speicher ZMS. Der Stapelspeicher ST ist über eine Leitung L3 mit dem zweiten Eingang E2 des UND-Glieds U verbunden. Der Daten-Ausgang D des Zwischenmerker-Speichers ZMS ist über eine Leitung L5 mit dem Bitprozessor BP verbunden. Über ein Bussystem B2 kann der Zwischenmerker-Speicher ZMS durch den Bitprozessor BP adressiert werden. Die Anzahl der Speicherplätze des Stapelspeichers ST sollte der Anzahl der programmierbaren Klammerebenen der speicherprogrammierbaren Steuerung entsprechen.

Auf die Darstellung weiterer, für eine speicherprogrammierbare Steuerung notwendiger Elemente, wie beispielsweise Ein-Ausgabe-Baugruppen und Steuerlogik wurde der Übersichtlichkeit halber verzichtet.

Der Bitprozessor BP erhält die Steueranweisungen über das Bussystem BI aus dem Befehlsspeicher BS. Zum Abspeichern von Zwischenmerker-Ergebnissen ZM im Zwischenmerker-Speicher ZMS, die jeweils das angestrebte Verknüpfungsergebnis der zu betrachtenden Teilmenge von Eingangssignalen angeben, muß der Bitprozessor BP allerdings intern so vorbereitet sein, daß er die Befehle "SZM: Setze-Zwischenmerker" und "LZM: Lade-Zwischenmerker" erkennt. Zur Vereinfachung der Programmierung können dabei weitere Steueranweisungen in den Befehlsvorrat des Bitprozessors BP aufgenommen werden, wie beispielsweise "LNZM: Lade-Zwischenmerker-negiert", "UZM: UND-Zwischenmerker""OZM: ODER-Zwischenmerker", usw.. Auf diese zusätzlichen Steueranweisungen braucht hier jedoch nicht weiter eingegangen zu werden.

Beim Programmablauf wird bei jeder UND-Klammer-Auf-Steueranweisung "U(" (z.B. 3. Steueranweisung) über die Leitung L1 das aktuelle, im Bitprozessor BP vorliegende Verknüpfungsergebnis VKE an den Eingang E1 des UND-Glieds U geführt.

Bei der ersten UND-Klammer-Auf-Steueranweisung "U(" (3.Steueranweisung) wird dieses Verknüpfungsergebnis VKE entweder direkt über den Ausgang A des UND-Gliedes U in den Stapelspeicher ST geschrieben oder der Stapelspeicher ST ist im Grundzustand mit einem Signal logisch "I" besetzt und das Verknüpfungsergebnis VKE, das am Eingang E1 des UND-Glieds U anliegt, wird zusammen mit einem Signal logisch "I" das über die Leitung L3 an den Eingang E2 des UND-Glieds U geführt wird, zu UND verknüpft. Nachdem das Signal logisch "I" das neutrale Element der UND-Verknüpfung ist, gelangt damit das Verknüpfungsergebnis VKE über den Ausgang A und über die Leitung L2 ebenfalls als Verknüpfungsstatus VKS(I) an die oberste Stelle des Stapelspeichers ST. Dieser ist dabei so organisiert, daß der jeweils nächste gebildete Verknüpfungsstatus VKS(n) jeweils in die oberste Speicherzelle geschrieben wird und daß die vorher sich in den jeweiligen Speicherzellen befindlichen Informationen jeweils eine Speicherzelle tiefer abgelegt werden. Der Speicherorganisation liegt damit das Prinzip "FIRST IN - LAST OUT" zugrunde.

Bei jeder weiteren UND-Klammer-Auf-Steueranweisung "U(" während des Programmablaufs (im Beispiel gemäß FIG 1 liegt eine solche Steueranweisung nicht mehr vor) wird das jeweils aktuell vor dieser UND-Klammer-Auf-Steueranweisung vorliegende Verknüpfungsergebnis VKE des Bitprozessors BP über die Leitung L1 zum zum Eingang E1 des UND-Glieds U geführt und zusammen mit dem jeweils an oberster Stelle im Stapelspeicher ST befindlichen Verknüpfungsstatus VKS(n-I), der über die Leitung L3 an den Eingang E2 des UND-Glieds U geführt wird, zu UND verknüpft. Der neue Verknüpfungsstatus VKS(n) wird über den Ausgang A und die Leitung L2 wieder an die erste Stelle des Stapelspeichers ST geschrieben.

Das Bildungsgesetz für den n-ten Verknüpfungsstatus VKS, welcher der n-ten UND-Klammer-Auf-Steueranweisung entspricht, lautet entsprechend dem oben ausgeführten:

$$VKS(n) : VKS(n - I) \text{ UND } VKE$$

Für den ersten Verknüpfungsstatus VKS(I), der bei der ersten Klammer-Auf-Steueranweisung gebildet wird, gilt:

$$VKS(I) : VKE$$

Die Bildung des Verknüpfungsstatus VKS(n) erfolgt dabei automatisch und parallel zur Programmabarbeitung durch den Bitprozessors BP. Erst wenn an einer beliebigen Stelle des Programms ein Zwischenmerker-Ergebnis ZM gebildet werden soll, das der Verknüpfung einer Teilmenge von Eingangssignalen aus der Gesamtzahl der durch das Programm bearbeiteten Eingänge E1 ... E5 entspricht, bewirkt die dafür im Programm vorgesehene "Setze-Zwischenmerker "-Steueranweisung SZM, daß der im Stapelspeicher ST sich an erster Stelle befindende Verknüpfungsstatus VKS(n) an den Eingang E2 des UND-Glieds U gelegt wird und zusammen mit dem aktuellen Verknüpfungsergebnis VKE des Bitprozessors BP, das an den Eingang E1 des UND-Glieds U angelegt wird, zu UND verknüpft wird und daß das Ergebnis dieser Verknüpfung als Zwischenmerker-Ergebnis ZM über den Ausgang A des UND-Glieds U und über die Leitung L4 in einen Speicherplatz des Zwischenmerker-Speichers ZMS geschrieben wird. Der Inhalt des Stapelspeichers ST bleibt dabei unverändert.

Die Steueranweisung "SZM: Setze-Zwischenmerker" bewirkt gleichzeitig, daß der Bitprozessor BP über das zweite Bussystem B2 einen entsprechenden Speicherplatz im Zwischenmerker-Speicher ZMS adressiert. Beispielsweise würde durch die Steueranweisung "SZM5: Setze-Zwischenmerker 5" das Ergebnis der Verknüpfung über die Leitung L4 in den 5. Speicherplatz des Zwischenmerker-Speichers ZMS geschrieben.

Der Zwischenmerke!-Speicher ZMS kann bedarfsweise durch den Bitprozessor BP zur weiteren Verarbeitung der Zwischenmerker-Ergebnisse "gelesen" werden. Dies erfolgt durch eine Steueranweisung "LZM: Lade-Zwischenmerker", die den Bitprozessor BP veranlaßt, über den Bus B2 eine entsprechende Speicherzelle des Zwischenmerker-Speichers zu adressieren und für die weitere Verarbeitung zu übernehmen.

**Patentansprüche**

1. Verfahren zum Betrieb einer speicherprogrammierbaren Steuerung, bei dem ein Bitprozessor (BT) eine Gesamtmenge von Eingangssignalen entsprechend einer Reihe von Befehlen sequentiell nach den Regeln der Boulschen Algebra verknüpft, wobei das jeweils vorliegende Verknüpfungsergebnis mit einem weiteren Signal verknüpft wird und das weitere Signal im Falle, daß der nächste Befehl ein "UND-Klammer-Auf"-Befehl ist, seinerseits durch Verknüpfung von Eingangssignalen gebildet wird, **dadurch gekennzeichnet,**
   - daß beim ersten Befehl "UND-Klammer-Auf" das vorliegende Verknüpfungsergebnis (VKE) des Bitprozessors (BP) als Verknüpfungsstatus (VKSI) in einem nach dem Prinzip First-In-Last-Out arbeitenden Stapelspeicher (ST) abgelegt wird,
   - daß bei jedem weiteren Befehl "UND-Klammer-Auf" jeweils ein weiterer Verknüpfungsstatus (VKS(n)) durch UND-Verknüpfung des jeweils letzten, im Stapelspeicher (ST) eingetragenen Verknüpfungsstatus (VKS(n-I)) mit dem jeweils vorliegenden Verknüpfungsergebnis (VKE) des Bitprozessors (BP) gebildet wird,
   - daß mit einem Befehl "Setze-Zwischenmerker" in einen Zwischenmerker-Speicher (ZMS) ein Zwischenmerker-Ergebnis (ZM) abgelegt wird, das sich durch eine UND-Verknüpfung aus den jeweils zuletzt in den Stapelspeicher (ST) eingetragenen Verknüpfungsstatus (VKS(n)) und dem aktuellen Verknüpfungsergebnis (VKE) des Bitprozessors ergibt, und
   - daß das jeweilige Zwischenmerker-Ergebnis (ZM) mit einem weiteren Befehl "Lade-Zwischenmerker" vom Bitprozessor (BP) zur Verknüpfung mit weiteren Signalen oder zur Ansteuerung eines Ausganges (A2) übernommen wird.

2. Anordnung zur Durchführung des Verfahren nach Anspruch 1 mit einem Befehlsspeicher (BS), in dem eine Reihe von Befehlen enthalten ist, mit einem Bitprozessor (BP), der eine Gesamtmenge von binären Eingangssignalen entsprechend den Befehlen sequentiell miteinander verknüpft, einen vom Bitprozessor (BP) adressierbaren Zwischenmerker-Speicher (ZMS) zur Zwischenspeicherung von Zwischenmerker-Ergebnissen (ZM), **dadurch gekennzeichnet,**
   - daß der Bitprozessor (BP) auf das Erkennen von Befehlen "Setze-Zwischenmerker" und "Lade-Zwischenmerker" eingerichtet ist,
   - daß an einen Ausgang des Bitprozessors (BP) der eine Eingang (E1) eines UND-Gliedes (U) angeschlossen ist und der Bitprozessor (BP) bei Erkennen eines Befehls "UND-Klammer-Auf" das jeweils vorliegende Verknüpfungsergebnis diesem Eingang zuführt,
   - daß an den Ausgang (A) des UND-Gliedes (U) der Eingang eines nach dem First-In-Last-Out-Prinzip arbeitenden Stapelspeichers (ST) angeschlossen ist, dessen Ausgang mit dem zweiten Eingang (E2) des UND-Gliedes (U) verbunden ist,
   - daß an den Ausgang (A) des UND-Gliedes (U) ferner der Eingang des Zwischenmerker-Speichers (ZMS) angeschlossen ist und der Bitprozessor (BP) bei Auftreten eines Befehls "Setze-Zwischenmerker" eine Adresse dem Zwischenmerker-Speicher (ZMS) zuführt, unter der das Ausgangssignal des UND-Gliedes (U) eingetragen wird und

- daß an den Ausgang des Zwischenmerker-Speichers (ZMS) ein Eingang des Bitprozessors (BP) angeschlossen ist und der Bitprozessor (BP) bei Auftreten eines Befehls "Lade-Zwischenmerker" dem Zwischenmerker-Speicher (ZMS) eine Adresse zuführt und das unter dieser Adresse gespeicherte Zwischenmerkerergebnis (ZM) abruft.

## Claims

1. A method for operating a programmable control system, in which a bit processor (BP) combines sequentially a whole set of input signals corresponding to a series of commands according to the rules of Boolean algebra, wherein the respective current result of the logic operation is combined with a further signal and the further signal, in the case where the next command is an "AND-left bracket" command, is itself formed by a logic operation upon input signals,
   characterised
   - in that with the first "AND-left bracket" command the current logic operation result (VKE) of the bit processor (BP) is deposited as a logic operation status (VKSI) in a stack (ST) working according to the first-in-last-out principle,
   - in that with each further "AND-left bracket" command, a further logic operation status (VKS(n)) is formed by an AND logic operation of the last logic operation status (VKS(n-I)) entered in the stack (ST) with the present logic operation result (VKE) of the bit processor (BP),
   - in that with a "set intermediate flag" command an intermediate flag result (ZM), which results from an AND operation upon the respective logic operation status (VKS(n)) entered last in the stack (ST) and the current logic operation result (VKE) of the bit processor, is deposited in an intermediate flag memory (ZMS), and
   - in that the respective intermediate flag result (ZM) is taken up, upon a further command "load intermediate flag", by the bit processor (BP) for logic operation with further signals or for controlling an output (A2).

2. An arrangement for carrying out the method according to claim 1 with a command memory (BS) in which is contained a series of commands, with a bit processor (BP) which sequentially combines a whole set of binary input signals with each other according to the commands, an intermediate flag memory (ZMS) for temporary storage of intermediate flag results (ZM), able to be addressed by the bit processor (BP), characterised in that
   - the bit processor (BP) is set to recognise the "set intermediate flag" and "load intermediate flag" commands,
   - in that connected to an output of the bit processor (BP) there is an input (E1) of an AND element (U) and, when recognising an "AND left bracket command, the bit processor (BP) supplies the respective current logic operation result to this input
   - in that connected to the output (A) of the AND element (U) is the input of a stack (ST) working according to the first-in-last-out principle, the output of which is connected to the second input (E2) of the AND element (U),
   - in that there is furthermore connected to the output (A) of the AND element (U) the input of the intermediate flag memory (ZMS) and, when a "set intermediate flag" command occurs, the bit processor (BP) supplies an address to the intermediate flag memory (ZMS) under which the output signal of the AND element (U) is recorded,
   - and in that connected to the output of the intermediate flag memory (ZMS) there is an input of the bit processor (BP) and, when a "load intermediate flag" command occurs, the bit processor (BP) supplies an address to the intermediate flag memory (ZMS) and the intermediate flag result (ZM) stored under this address is retrieved.

## Revendications

1. Procédé pour exploiter une commande programmable en mémoire, selon lequel un processeur de bits (BT) combine séquentiellement une quantité totale de signaux d'entrée, en fonction d'une série d'instructions, conformément aux règles de l'algèbre booléenne, le résultat respectivement présent de la combinaison étant combiné avec un autre signal et cet autre signal étant formé pour sa part, et dans le cas où l'instruction suivante est une instruction "UND-Klammer-Auf", par la combinaison de signaux d'entrée, caractérisé par le fait
   - que dans le cas de la première instruction "UND-Klammer-Auf" (c'est-à-dire ET-parenthèse ouverte), le résultat présent de combinaison (VKE) du processeur de bits (BP) est mémorisé en tant qu'état de combinaison (VKS1), dans une mémoire pile (ST) travaillant selon le principe first-in-last-out (c'est-à-dire premier entré, premier sorti),
   - que, pour chaque autre instruction "UND-Klammer-Auf", respectivement un autre état de combinaison (VKS(n)) est formé au moyen de la combinaison ET du dernier état respectif de combinaison (VKS(n-I)) introduit dans la mémoire pile (ST), et du résultat de combinaison respectivement présent (VKE) du processeur de bits (BP),

- avec une instruction "positionnement d'un témoin d'un pointeur intermédiaire" dans une mémoire de pointeurs intermédiaires (ZMS), un résultat de pointeur intermédiaire (ZM) est mémorisé, ce résultat étant obtenu par une combinaison ET du dernier état respectif de combinaison (VKS(n)) introduit dans la mémoire pile (ST), et du résultat actuel de combinaison (VKE) du processeur de bits, et

- que le résultat respectif de pointeur intermédiaire (ZM) est pris en charge, sous l'effet d'une autre instruction "chargement d'un pointeur intermédiaire", par le processeur de bits (BP) pour être combiné à d'autres signaux ou pour la commande d'une sortie (A2).

2. Dispositif pour la mise en oeuvre du procédé suivant la revendication 1, comportant une mémoire d'instructions (BS), qui contient une série d'instructions, un processeur de bits (BP), qui associe entre eux séquentiellement un ensemble complet de signaux d'entrée binaires conformément aux instructions, une mémoire de pointeurs intermédiaires (ZMS), qui peut être adressée par le processeur de bits (BP) qui sert à mémoriser temporairement des résultats de pointeurs intermédiaires (ZS), caractérisé par le fait

- que le processeur de bits (BP) est conçu de manière à identifier des instructions "positionnement d'un pointeur intermédiaire" et "chargement d'un pointeur intermédiaire",

- qu'une entrée (E1) d'un circuit ET (U) est raccordée à une sortie du processeur de bits (BP) et que, lors de l'identification d'une instruction "UND-Klammer-Auf", le processeur de bits (BP) envoie le résultat respectif présent de combinaison à cette entrée,

- et qu'à la sortie (A) du circuit ET (U) est raccordée l'entrée d'une mémoire pile (ST) travaillant selon le principe First-In-Last-Out, dont la sortie est raccordée à la seconde entrée (E2) du circuit ET (U),

- qu'à la sortie (A) du circuit ET (U) est en outre raccordée l'entrée de la mémoire de pointeurs intermédiaires (ZMS) et que lors de l'apparition d'une instruction "positionnement d'un pointeur intermédiaire", le processeur de bits (BP) envoie à la mémoire de pointeurs intermédiaire (ZMS) une adresse à laquelle le signal de sortie du circuit ET (U) est envoyé, et
- qu'à la sortie de la mémoire de pointeurs intermédiaires (ZMS) est raccordée une entrée du processeur de bits (BP) et que, lors de l'apparition d'une instruction "chargement d'un pointeur intermédiaire", le processeur de bits (BP) envoie une adresse à la mémoire de pointeurs intermédiaires (ZMS) et appelle le résultat de pointeur intermédiaire (ZM) mémorisé à cette adresse.

## FIG 1

E1 E2 E3 E4 A1

E5 ZM1

A2

## FIG 2

BS

B1

L1 VKE →

E2 E1

VKS(n-1)

& U

L3

BP A VKS(n) = VKS(n-1) ∧ VKE

L4 ZM = VKS(n) ∧ VKE

L2

B2

ST ZMS

D

L5